# EUROPEAN PATENT SPECIFICATION

(11) **EP 4 464 470 B1**
(45) Date of publication and mention of the grant of the patent: **07.05.2025**
(21) Application number: 23174271.9
(22) Date of filing: 19.05.2023
(51) Int. Cl.: B25J 15/00, B25J 15/06

(54) **SUCTION MODULE**
SAUGMODUL
MODULE D'ASPIRATION

(43) Date of publication of application: 20.11.2024
(73) Proprietor: Aptiv Technologies AG, 8200 Schaffhausen (CH)
(72) Inventor: MATIAS, Pedro, Lisboa 1750-465 (PT); BISPO, João, Corroios 2855-202 (PT); COELHO, Ruipedro, Lisboa 1600-514 (PT)
(74) Representative: Manitz Finsterwald Patent- und Rechtsanwaltspartnerschaft mbB

(56) References cited:
- EP-A1- 3 869 544
- GB-A- 2 554 619
- US-A1- 2022 184 818
- US-B2- 11 167 428

## Description

Suction holders, such as for example vacuum lifting pads, are generally known and serve to lift an item or to mount an item to a surface. In the field of the manufacture of a wire harness, suction elements are used to temporarily fix a holder for electrical wires on a base plate or a table. When developing and manufacturing a wire harness it is necessary to assure a proper adhesion of the suction element on the table for a sustainable time. Further, a sufficient stability of the holder is required to withstand the weight of the wires and any tilting forces applied to the holder during assembly of the wire harness.

Accordingly, there is a need to provide a versatile suction element that is able to adhere to a ground surface for a long period of time with sufficient stability even if tilting forces are aoolied to the suction element Such holders are known from EP3869544A1, US2022184818A1, US11167428B2, and GB2554619A, whereby a Bernoulli grip is used in EP28693544A1 instead of a suction holder.

The present disclosure provides a suction module comprising a main body with a suction cup, wherein the main body has a vacuum passage that establishes a communication between a first vacuum port and the suction cup, and that further establishes a communication with at least one further vacuum port located at an outer surface of the main body. According to the first aspect, the suction element is designed as a suction module having a first vacuum port for applying a vacuum to the suction cup. The first vacuum port serves to apply a vacuum either by means of an external device such as a stationary vacuum source or a portable vacuum source, or by means of any other suitable device. The at least one further vacuum port that is located at an outer surface of the main body may either be closed and sealed, e.g. with a plug, to use such module as a stand-alone device. Alternatively, the at least one further suction port may be used to connect with a further suction module thereby increasing the adhering surface of the module assembly. Simultaneously, the upper surface area of such module assembly is increased which provides an enlarged surface area for fixing fixtures, such as holders for wires.

With a plurality of suction modules as described above, it is possible to make a cluster of suction modules in a desired size and shape. Such cluster has an increased suction force and an increased area covering a ground surface wherein only a single vacuum source needs to be connected to the first vacuum port of one module. The further suction modules being part of the cluster can be connected with the first suction module by means of a connector.

Advantageous embodiments are disclosed in the specification, the subclaims and the drawings.

According to a first embodiment, the further vacuum port of the suction module is located at an outer circumferential surface of the main body. This facilitates the connection to a further suction module since a rod-like or bar-like element can be used to connect two suction modules.

According to a further embodiment, at least two further vacuum ports are provided wherein all vacuum ports are equally spaced. In the case of three or more vacuum ports this leads to a star-like arrangement having a high degree of flexibility and stability.

According to a further embodiment, the first vacuum port is provided with a check valve. This allows to apply vacuum to the suction cup that is mounted to the suction module also after the vacuum source has been removed from the first vacuum port. For releasing vacuum from the suction module, it is merely necessary to open the check valve.

According to a further embodiment, an upper surface of the main body is provided with at least two identical fixtures for fixing a holding element. The holding element may for example be a fork holder for wires and the fixtures may have the form of a hole, a threaded hole, a bore or the like. If there are two or more fixtures provided on such module, there is a higher range of positions available for placing a holder thereby assuring a correct and versatile routing of a wire harness.

According to a further embodiment, the upper surface of the main body is provided with three identical fixtures that are equally spaced. Such design allows for a very high variability regardless of the use of a single suction module or of a cluster of suction modules.

According to a further embodiment, the main body has the shape of a circular cylinder with a flat upper cover surface. Such design has proven as advantageous with regard to handling, cleaning and forming a cluster of modules.

According to a further embodiment, the further vacuum port is sealed with a plug. In this embodiment, the suction module can be used as a single module, however, after the plug is removed, the single module can be connected to at least one further suction module to form an assembly of suction modules.

According to a further embodiment, the main body is integrally made of one piece. The main body can for example be manufactured by means of an injection moulding or 3D-printing. In both cases it is merely necessary to mount the suction cup to the main body without further assembly steps being necessary.

According to a further embodiment, the vacuum ports are provided with a thread. The thread can form a part of the main body. Alternatively, it is possible to provide threaded inserts, such as metallic inserts, that are anchored in the vacuum ports.

According to a further aspect of this disclosure, an assembly of at least two suction modules as described above is provided, wherein the suction modules are releasably interconnected by means of at least one connector that provides a communication passage between the vacuum passages of all suction modules. As described above, this provides the advantage that only one single vacuum source needs to be connected to the first vacuum port of a first suction module. If vacuum is applied, the vacuum passages of the vacuum modules and the communication passage of the connector allow for a distribution of the applied vacuum to the suction cups of all modules. Of course, it will be necessary to close and seal any open vacuum port that has no check valve or no connector.

According to an embodiment, the suction cups of all suction modules are arranged coplanar.

According to a further embodiment, the connector has the shape of a straight rod, or has at least three coplanar arms with respectively two adjacent arms including the same angle. Such connector provides a cluster of two, three, four or more suction modules in a symmetrical design for good handling and stability properties.

According to a further embodiment, a distance between two suction modules equals about 80 - 120 % of a diameter of the connecting element. In this embodiment the suction modules are placed relatively closely to each other which improves the stability of the assembly.

According to a further embodiment, the assembly comprises a platform interconnecting the suction modules of the assembly wherein the platform is fixed in fixtures of the suction modules and has fixtures for fixing a holding element. By providing the platform, not only the stability of the assembly can be increased, but is also possible to provide fixtures at a location between adjacent suction modules to provide more options for mounting a fixture at a desired location.

Exemplary embodiments and functions of the present disclosure are described with reference to the following drawings, showing schematically in:
- Fig. 1: A perspective view of a suction module;
- Fig. 2: A top view of the module of Fig. 1;
- Fig. 3: A side view of the module of Fig. 1;
- Fig. 4: A cross-section along the line A-A of Fig. 3;
- Fig. 5: An assembly of two suction modules interconnected by means of a connector;
- Fig. 6: An assembly of three suction modules interconnected by means of a connector (not shown) and a platform;
- Fig. 7: A platform; and
- Fig. 8: A further embodiment of a platform.

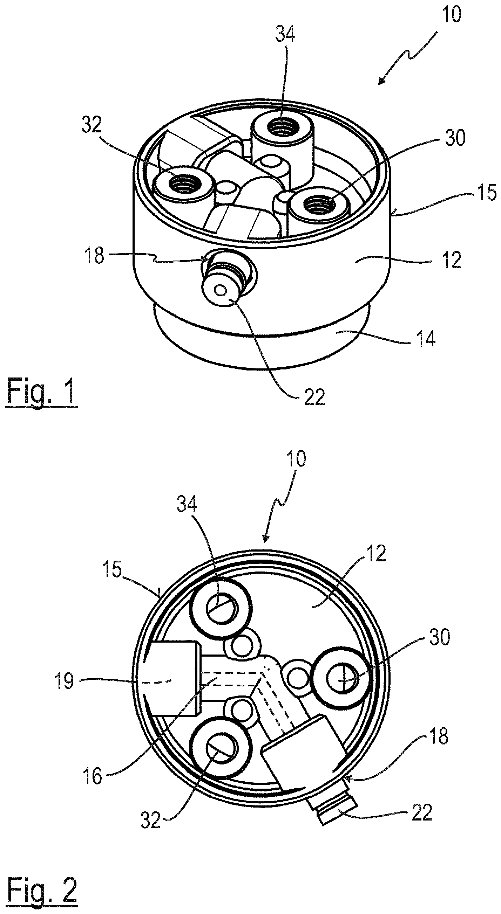

Fig. 1 depicts a suction module 10 comprising a main body 12 with a suction cup 14. The main body 12 of this embodiment has the shape of a circular cylinder with a flat upper cover surface. It is noted that for illustrative purposes only, the flat upper cover surface of the suction module is omitted in all Figures.

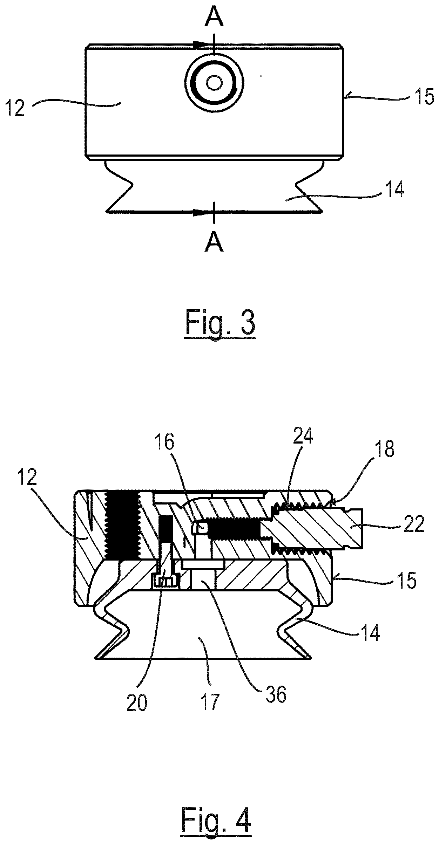

In the embodiment shown in the Figures, the main body 12 has a vacuum passage 16 (Fig. 4) that establishes a communication between a first vacuum port 18, located at an outer circumferential surface 15 of the main body 12, and an interior space 17 (Fig. 4) of a suction cup 14 which is mounted to the main body 12, e.g. by means of screws 20. The vacuum passage 16 further establishes a communication with a further vacuum port 22 also located at an outer circumferential surface 15 of the main body 12.

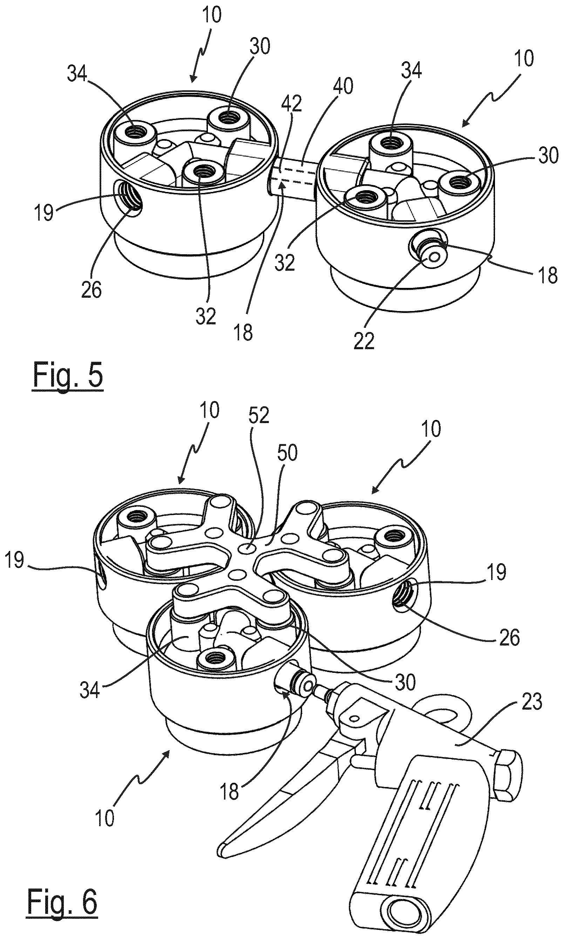

In order to apply a vacuum to the vacuum passage 16 and to the interior space 17 of the suction cup 14 a check valve 22 is inserted in the first vacuum port 18. Thereby, it is possible to apply vacuum, e.g. by means of a vacuum gun 24 (Fig. 6), to the interior space 17 of the suction cup 14. It is noted that Fig. 4 shows the check valve 22 as a solid body for illustrative purposes only.

As illustrated in Fig. 2, the further vacuum port 19 and the fist vacuum port 18 include an angle of 120° and the further vacuum port 19 is closed and sealed with a plug (not shown in the drawings). Both vacuum ports 18, 19 are provided with a thread 24, 26 such that the check valve 22 and the plug can be screwed into the respective port. Alternatively, the ports can be provided with a threaded insert.

The upper cover surface (that is not shown in the drawings) of the main body 12 is provided with a plurality of identical fixtures 30, 32, 34 for fixing a holding element such as a holder or a holding fork. The holding element can be inserted or screwed into the fixtures 30, 32, 34 that are designed as a bore, threaded bore or the like. The drawings show that the illustrated embodiment has three identical fixtures that are equally spaced thereby forming the corners of an isosceles triangle.

The suction module shown in Figs. 1 to 4 can be used to mount a holder on a ground surface. After the holder is inserted in one of the fixtures 30, 32 and 34 and after the further vacuum port 19 has been closed and sealed, e.g. by means of a plug, the suction module can be placed on a ground surface at a desired location. Thereafter, vacuum can be applied to the vacuum passage 16 and thereby to the interior space 17 of the suction cup 14 wherein the vacuum passes through a central passage 36 in the bottom of suction cup 14. Thereby, the suction cup 14, which is made of a rubber-like, resilient material, is compressed and adheres to the ground surface. After this has been done, the vacuum source can be removed. and the vacuum is kept in the suction module by means of the check valve 22. For removing the module from the ground surface, the check valve 22 needs to be actuated to release the vacuum from the suction module 10.

Fig. 5 shows an assembly of two suction modules 10 that are designed as described above wherein both suction modules 10 are releasably interconnected by means of a connector 40 that provides a communication passage 42 between the vacuum passages 16 of both suction modules 10. The connector 40 is designed as a cylindrical, rod-shaped element with two threaded ends. Accordingly, one end of the connector 40 is threaded into the further vacuum port 19 of the vacuum module 10 having the check valve 22. The opposite end of the connector 40 is threaded into the first vacuum port 18 of the left vacuum module 10 shown in Fig. 5. The further vacuum port 19 of the left vacuum module 10 is closed, e.g. by means of a plug (not shown).

Accordingly, the assembly shown in Fig. 5 provides not only three fixtures but a total of six fixtures 30, 32, and 34 located at different spots.

Fig. 6 illustrates a further assembly comprising a total of three vacuum modules 10 interconnected by means of a connector (not visible in Fig. 6), wherein this connector has three coplanar arms with respectively two adjacent arms including an angle of 120°. Further, the further vacuum ports 19 visible in Fig. 6 are again closed and sealed, e.g. with a plug (not shown).

In the assembly of Fig. 6, a platform 50 is fixed in respectively two fixtures of the three suction modules 10. For example, the platform 50 is provided with pins at the lower surface of the platform that are inserted in the fixtures of the suction modules. At an upper surface of the platform 50 a plurality of fixtures 52 is provided and these fixtures may also be located between the suction modules 10.

For adhering the assembly of suction modules of Fig. 6 on a ground surface, it is merely necessary to apply vacuum to the check valve 22 in the port 18. The vacuum is communicated through the vacuum passage 16 of each suction module 10 and through the vacuum passage of the connector to apply vacuum to the suction cups of all three suction modules.

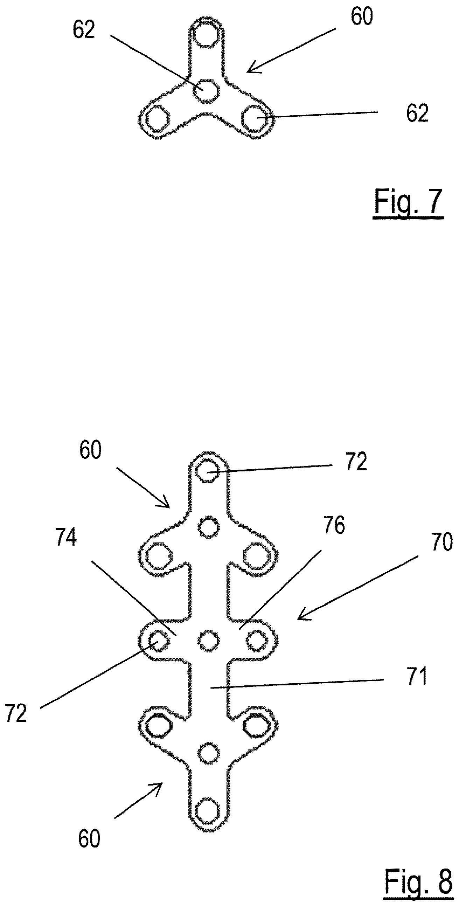

Fig. 7 shows a plan view of a further embodiment of a platform 60 that is composed of three arms with respectively two arms including an angle of 120°. At an upper surface of the platform 60 four fixtures 62 are provided with one fixture being located at the centre and three fixtures being located at the outer end of the three arms of the platform 60. The platform 60 can be mounted on a suction module and provides fixtures 62 not only at the outer circumference but also at the centre of the suction module.

Fig. 8 shows a further embodiment of a platform 70 comprising a straight bar 71 that integrally connects at its outer ends two platforms 60 as shown in Fig. 7. At the centre of the bar 71 two arms 74 and 76 extend in a transverse direction. Further, a plurality of fixtures 72 are provided at an upper surface of the platform 70.

It should be noted that the assembly as shown in Fig. 5 and Fig. 6 and the platforms shown in Figs. 6 to 8 are merely exemplary and there is a large variety of different assemblies that may be put together with the suction module disclosed above. As a matter of cause, each suction module may have more than two vacuum ports or may have a different shape and form.

## Claims

1. Suction module (10), said suction module comprising a main body (12) with a suction cup (14), wherein the main body (12) has a vacuum passage (16) that establishes a communication between a first vacuum port (18) and the suction cup (14), and that further establishes a communication with at least one further vacuum port (19) located at an outer surface (15) of the main body (12).

2. Suction module according to claim 1, wherein the further vacuum port (19) is located at an outer circumferential surface (15) of the main body (12).

3. Suction module according to any one of the preceding claims, wherein at least two further vacuum ports (19) are provided, wherein all vacuum ports (18, 19) are equally spaced.

4. Suction module according to any one of the preceding claims, wherein the first vacuum port (18) is provided with a check valve (22).

5. Suction module according to any one of the preceding claims, wherein an upper cover surface of the main body (12) is provided with at least two identical fixtures (30, 32, 34) for fixing a holding element.

6. Suction module according to claim 5, wherein the upper cover surface of the main body (12) is provided with three identical fixtures (30, 32, 34) that are equally spaced.

7. Suction module according to any one of the preceding claims, wherein the main body (12) has the shape of a circular cylinder with a flat upper cover surface.

8. Suction module according to any one of the preceding claims, wherein the further vacuum port (19) is sealed with a plug.

9. Suction module according to any one of the preceding claims, wherein the main body (12) is integrally made of one piece.

10. Suction module according to any one of the preceding claims, wherein the vacuum ports (18, 19) are provided with a thread (24, 26).

11. An assembly of at least two suction modules (10) according to any one of the preceding claims, wherein the suction modules (10) are releasably interconnected by means of at least one connector (40) that provides a communication passage (42) between the vacuum passages (16) of all suction modules (10).

12. Assembly according to claim 11, wherein the suction cups (14) of all suction modules (10) are arranged coplanar.

13. Assembly according to claim 11 or 12, wherein the connector (40) has the shape of a straight rod, or has at least three coplanar arms with respectively two adjacent arms including the same angle.

14. Assembly according to any one of claims 11 to 13, wherein a distance between two suction modules equals about 80 - 120% of a diameter of the connector.

15. Assembly according to any one of claims 11 to 14, comprising a platform (50, 60, 70) interconnecting the suction modules (10), wherein the platform (50, 60, 70) is fixed in fixtures (30, 32, 34) of the suction modules (10) and has fixtures (52, 62, 72) for fixing a holding element.

## Patentansprüche

1. Saugmodul (10), wobei das Saugmodul einen Hauptkörper (12) mit einem Saugnapf (14) umfasst, wobei der Hauptkörper (12) einen Vakuumdurchgang (16) aufweist, der eine Verbindung zwischen einem ersten Vakuumanschluss (18) und dem Saugnapf (14) herstellt, und der ferner eine Verbindung mit mindestens einem weiteren Vakuumanschluss (19) herstellt, der sich an einer Außenfläche (15) des Hauptkörpers (12) befindet.

2. Saugmodul nach Anspruch 1, wobei sich der weitere Vakuumanschluss (19) an einer Außenumfangsfläche (15) des Hauptkörpers (12) befindet.

3. Saugmodul nach einem der vorhergehenden Ansprüche, wobei mindestens zwei weitere Vakuumanschlüsse (19) vorgesehen sind, wobei alle Vakuumanschlüsse (18, 19) gleich beabstandet sind.

4. Saugmodul nach einem der vorhergehenden Ansprüche, wobei der erste Vakuumanschluss (18) mit einem Rückschlagventil (22) versehen ist.

5. Saugmodul nach einem der vorhergehenden Ansprüche, wobei eine obere Abdeckfläche des Hauptkörpers (12) mit mindestens zwei identischen Befestigungen (30, 32, 34) zum Befestigen eines Halteelements versehen ist.

6. Saugmodul nach Anspruch 5, wobei die obere Abdeckfläche des Hauptkörpers (12) mit drei identischen Befestigungen (30, 32, 34) versehen ist, die gleich beabstandet sind.

7. Saugmodul nach einem der vorhergehenden Ansprüche, wobei der Hauptkörper (12) die Form eines Kreiszylinders mit einer flachen oberen Abdeckfläche aufweist.

8. Saugmodul nach einem der vorhergehenden Ansprüche, wobei der weitere Vakuumanschluss (19) mit einem Stopfen abgedichtet ist.

9. Saugmodul nach einem der vorhergehenden Ansprüche, wobei der Hauptkörper (12) integral aus einem Stück hergestellt ist.

10. Saugmodul nach einem der vorhergehenden Ansprüche, wobei die Vakuumanschlüsse (18, 19) mit einem Gewinde (24, 26) versehen sind.

11. Anordnung von mindestens zwei Saugmodulen (10) nach einem der vorhergehenden Ansprüche, wobei die Saugmodule (10) mittels mindestens eines Verbinders (40) lösbar miteinander verbunden sind, der einen Verbindungsdurchgang (42) zwischen den Vakuumdurchgängen (16) aller Saugmodule (10) bereitstellt.

12. Anordnung nach Anspruch 11, wobei die Saugnäpfe (14) aller Saugmodule (10) koplanar angeordnet sind.

13. Anordnung nach Anspruch 11 oder 12, wobei der Verbinder (40) die Form einer geraden Stange aufweist oder mindestens drei koplanare Arme aufweist, wobei jeweils zwei benachbarte Arme denselben Winkel einschließen.

14. Anordnung nach einem der Ansprüche 11 bis 13, wobei ein Abstand zwischen zwei Saugmodulen etwa 80 - 120 % eines Durchmessers des Verbinders beträgt.

15. Anordnung nach einem der Ansprüche 11 bis 14, umfassend eine Plattform (50, 60, 70), die die Saugmodule (10) miteinander verbindet, wobei die Plattform (50, 60, 70) in Befestigungen (30, 32, 34) der Saugmodule (10) befestigt ist und Befestigungen (52, 62, 72) zum Befestigen eines Halteelements aufweist.

## Revendications

1. Module d'aspiration (10), ledit module d'aspiration comprenant un corps principal (12) avec une ventouse (14), dans lequel le corps principal (12) comporte un passage de vide (16) qui établit une communication entre un premier orifice de vide (18) et la ventouse (14), et qui établit en outre une communication avec au moins un orifice de vide supplémentaire (19) situé sur une surface extérieure (15) du corps principal (12).

2. Module d'aspiration selon la revendication 1, dans lequel l'orifice de vide supplémentaire (19) est situé sur une surface circonférentielle extérieure (15) du corps principal (12).

3. Module d'aspiration selon l'une quelconque des revendications précédentes, dans lequel au moins deux orifices de vide supplémentaires (19) sont prévus, dans lequel tous les orifices de vide (18, 19) sont également espacés.

4. Module d'aspiration selon l'une quelconque des revendications précédentes, dans lequel le premier orifice de vide (18) est pourvu d'un clapet anti-retour (22).

5. Module d'aspiration selon l'une quelconque des revendications précédentes, dans lequel une surface de couverture supérieure du corps principal (12) est pourvue d'au moins deux fixations identiques (30, 32, 34) pour la fixation d'un élément de maintien.

6. Module d'aspiration selon la revendication 5, dans lequel la surface de couverture supérieure du corps principal (12) est pourvue de trois fixations identiques (30, 32, 34) qui sont également espacées.

7. Module d'aspiration selon l'une quelconque des revendications précédentes, dans lequel le corps principal (12) a la forme d'un cylindre circulaire avec une surface de couverture supérieure plate.

8. Module d'aspiration selon l'une quelconque des revendications précédentes, dans lequel l'orifice de vide supplémentaire (19) est obturé par un bouchon.

9. Module d'aspiration selon l'une quelconque des revendications précédentes, dans lequel le corps principal (12) est intégralement constitué d'une seule pièce.

10. Module d'aspiration selon l'une quelconque des revendications précédentes, dans lequel les orifices de vide (18, 19) sont pourvus d'un filetage (24, 26).

11. Assemblage d'au moins deux modules d'aspiration (10) selon l'une quelconque des revendications précédentes, dans lequel les modules d'aspiration (10) sont interconnectés de manière amovible au moyen d'au moins un connecteur (40) qui fournit un passage de communication (42) entre les passages de vide (16) de tous les modules d'aspiration (10).

12. Assemblage selon la revendication 11, dans lequel les ventouses (14) de tous les modules d'aspiration (10) sont disposées de manière coplanaire.

13. Assemblage selon la revendication 11 ou 12, dans lequel le connecteur (40) a la forme d'une tige droite, ou comporte au moins trois bras coplanaires avec respectivement deux bras adjacents incluant le même angle.

14. Assemblage selon l'une quelconque des revendications 11 à 13, dans lequel une distance entre deux modules d'aspiration est égale à environ 80 à 120 % du diamètre du connecteur.

15. Assemblage selon l'une quelconque des revendications 11 à 14, comprenant une plate-forme (50, 60, 70) interconnectant les modules d'aspiration (10), dans lequel la plate-forme (50, 60, 70) est fixée dans des fixations (30, 32, 34) des modules d'aspiration (10) et comporte des fixations (52, 62, 72) pour fixer un élément de maintien.
